# EUROPÄISCHE PATENTSCHRIFT

(11) **EP 0 910 730 B1**
(45) Veröffentlichungstag und Bekanntmachung des Hinweises auf die Patenterteilung: **29.03.2000**
(21) Anmeldenummer: 97931692.4
(22) Anmeldetag: 01.07.1997
(51) Int. Cl.: F01N 3/08, B01D 53/32, F01N 9/00

(54) **VERFAHREN UND VORRICHTUNG ZUM SCHADSTOFFARMEN BETREIBEN EINES VERBRENNUNGSMOTORS**
PROCESS AND DEVICE FOR OPERATING AN INTERNAL COMBUSTION ENGINE WITH LESS POLLUTANT EMISSIONS
PROCEDE ET DISPOSITIF POUR FAIRE FONCTIONNER DE FAçON PEU POLLUANTE UN MOTEUR A COMBUSTION INTERNE

(30) Priorität: 01.07.1996 DE 19626381
(43) Veröffentlichungstag der Anmeldung: 28.04.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: NEFF, Willi, B-4721 Kelmis (BE); POCHNER, Klaus, D-52072 Aachen (DE); LEPPERHOFF, Gerhard, D-52223 Stolberg (DE); LÜTKEMEYER, Georg, D-52146 Würselen (DE)
(86) Internationale Anmeldenummer: DE9701373
(87) Internationale Veröffentlichungsnummer: WO9800630

(56) Entgegenhaltungen:
- DE-A- 4 231 581
- DE-A- 4 338 995
- US-A- 4 945 721
- US-A- 5 433 832
- PATENT ABSTRACTS OF JAPAN vol. 096, no. 001, 31.Januar 1996 & JP 07 247827 A (ISUZU MOTORS LTD), 26.September 1995,

## Beschreibung

Die Erfindung bezieht sich auf ein Verfahren zum schadstoffarmen Betreiben eines Verbrennungsmotors, mit den Merkmalen des Oberbegriffs des Anspruchs 1.

Zur Erhaltung einer lebenswerten Umwelt ist es erforderlich, den Schadstoffausstoß von Verbrennungsmotoren soweit alsmöglich zu reduzieren. Durch den Gesetzgeber werden zunehmend strengere Grenzwerte vorgeschrieben, die den Anteil der Schadstoffe im Abgas einschränken. So wurden beispielsweise in der Vergangenheit die Abgasgrenzwerte für Kraftfahrzeuge (Personenkraftwagen und Nutzfahrzeuge) etwa alle 3 bis 5 Jahre halbiert.

Gerade im Straßenverkehr, wo von den Motoren schnelle Drehzahl- und Laständerungen erwartet werden, bereitet es jedoch große. Schwierigkeiten, den Schadstoffausstoß zu reduzieren, ohne etwa Einbußen bei den Fahrleistungen oder umgekehrt einen Anstieg des Kraftstoffverbrauchs hinnehmen zu müssen.

Der Bedeutung des unregelmäßigen Betriebes entsprechend, ist zur Messung des Schadstoffausstoßes von Personenkraftwagen eine Fahrkurve vorgeschrieben, die den Warmlauf des Motors nach dem Kaltstart und einige Beschleunigungsphasen einschließt. Auch bei Nutzfahrzeugen ist für die Zukunft vorgesehen, den derzeitigen stationären 13-Punkte-Test durch eine dynamische Fahrkurve zu ersetzen. Damit wird für beide Fahrzeugtypen eine schrittweise Annäherung der Testzyklen an den realen Betrieb erreicht.

Zur Auswertung eines Zyklustests werden Proben der während der gesamten Zyklusdauer anfallenden Abgase gesammelt und lediglich die über die Zeit integrierte Schadstoffmenge berücksichtigt. Dabei stammt ein Großteil des Schadstoffausstoßes aus der Warmlaufphase und aus dem instationären Motorbetrieb.

Es ist seit langem bekannt, daß durch Anbringen eines Edelmetallkatalysators im Abgasstrang die im Abgas enthaltene chemische Energie genutzt werden kann, um eine Nachreaktion der Schadstoffe herbeizuführen. Bei Erreichen einer Mindesttemperatur des Katalysators reagieren die im Abgas enthaltenen unverbrannten Kohlenwasserstoffe, das Kohlenmonoxid und Stickoxide zu harmlosen Verbindungen. Diese Technik wird seit kurzem bei Dieselmotorfahrzeugen als sogenannte Oxidationskatalysator eingesetzt und erreicht beim Partikel-, HC- und CO-Abbau einen Wirkungsgrad von etwa 30 - 50%.

Beim Ottomotor ist eine derart geringe Schadstoffminderung nicht ausreichend, so daß seit etwa zehn Jahren dieser hier als ungeregelt bezeichnete Katalysator durch einen 3-Wege-Katalysator mit λ-Regelung verdrängt wurde. Dadurch kann die Schadstoffumsetzung drastisch verbessert werden und es werden Wirkungsgrade von weit über 90% erreicht.

Während der Beschleunigungsphasen wäre für den idealen Betrieb des Motors jedoch eigentlich eine höhere Kraftstoffmenge erforderlich, die jedoch das Luftverhältnis λ zu Werten niedriger als 1 verschieben und zu einem schlechteren Katalysatorwirkungsgrad bezüglich HC und CO führen würde. Auch bei Wegnehmen der Last kommt es zu einem Abweichen des Gemisches vom idealen Punkt, da durch die geänderte Strömung im Ansaugsystem plötzlich mehr Kraftstoff von den Saugrohrwänden abdampft. Nur durch aufwendige Maßnahmen kann das λ im instationären Betrieb in grober Näherung konstant gehalten werden.

Ein weiterer Nachteil der bekannten Katalysatortechnologie ist die zum Einsetzen der chemischen Reaktionen erforderliche Mindesttemperatur des Katalysators. So dauert es nach einem Kaltstart des Motors mehrere Minuten, bis der Katalysatorkörper durch Kontakt mit dem heißen Abgas erwärmt ist. Durch Gemischanfettung während dieser Warmlaufphase kann erreicht werden, daß die Verbrennungstemperaturen im Motor ansteigen und damit ein heißeres Abgas abgegeben wird, das zudem in Form unverbrannter Kohlenwasserstoffe erhöhte chemische Energie enthält, die ihrerseits den Katalysator aufheizt. Nachteilig hieran ist ein Verbrauchsanstieg aufgrund des fetteren Gemisches und eine Erhöhung der Rohkonzentration der Schadstoffe, die schlimmerweise praktisch ohne Abgasnachbehandlung in die Umwelt entlassen werden, da ja der Katalysator noch unwirksam ist.

Da in den ersten 50 Sekunden eines Testzyklus typischerweise 60 - 70% der im gesamten Zyklus emittierten Schadstoffe entstehen, werden derzeit außermotorische Zusatzmaßnahmen zur Aufheizung des Katalysators erprobt. Durch Verlegung des Abgaskatalysators nahe an den Motor kann die im Abgas enthaltende Wärmeenergie besser genutzt werden. Es besteht jedoch die Gefahr, daß der Katalysator bei Vollast zu stark erhitzt, beschädigt oder gar zerstört wird.

Auch die Montage von Heizungen im Katalysator wird untersucht. Es gibt brennerbeheizte Systeme, denen jedoch erhebliche Sicherheitsbedenken entgegenstehen. Elektrisch beheizte Systeme andererseits erfordern einegroßzügigere Auslegung von Lichtmaschine und Akkumulator. Letzteres ist insbesondere deswegen problematisch, weil die elektrische Energie zu einem Zeitpunkt benötigt wird, zu dem der Motor praktisch keine mechanische Energie abgibt. Beiden Systemen gemeinsam ist der Nachteil, daß die Wärmekapazität der Abgasanlage überwunden werden muß, was in jedem Fall dazu führt, daß die Wirksamkeit der Abgasreinigung erst mit einer gewissen Zeitverzögerung gegenüber dem Einschalten des Motors einsetzen kann.

Aus der DE-A-42 31 581 ist ein Verfahren mit den Verfahrensschritten des Oberbegriffs des Anspruchs 1 bekannt. Zur Maximierung der Schadstoffumwandlung erfolgen die Umwandlung beeinflußende Beimischungen und eine Regelung aller Betriebsgrößen der die Umwandlung bewirkenden plasmachemischen Reaktionen.

Aus der JP-A-07247827 ist es bekannt, ein elektrisches Abgas-Nachbehandlungssystem im Abgassystem einer Dieselbrennkraftmaschine bei Vorliegen niedriger Abgastemperatur zu betreiben. Der Betrieb des Nachbehandlungssystems erfolgt während der gesamten Warmlaufzeit und bei hoher Abgastemperatur wird abgeschaltet.

Die vorbeschriebenen bekannten Verfahren erfolgen während des Dauerbetriebs. Dementsprechend ist die Belastung der elektrischen Anlage des Verbrennungsmotors groß. Demgegenüber liegt der Erfindung die Aufgabe zugrunde, ein Verfahren der in Rede stehenden Art so zu verbessern, daß einerseits die gewünschte Verringerung der Emissionen des Verbrennungsmotors während seiner gesamten Betriebsdauer erreicht wird, andererseits aber die Auslegung der elektrischen Anlage des Verbrennungsmotors nicht unverhältnismäßig großzügig und damit aufwendig ausgelegt werden muß.

Diese Aufgabe wird durch die Verfahrensschritte entsprechend dem Kennzeichen des Anspruchs 1 gelöst.

Ausgestaltungen und Weiterbildungen der Erfindung sind in den Unteransprüchen beschrieben.

Die Erfindung geht davon aus, eine elektrische Vorrichtung zur Nachbehandlung von Abgas nur jeweils für einen kurzen Zeitraum während des Warmlaufens oder während einer Laständerung des Motors einzuschalten. Bei der Erfindung wird zur Nachbehandlung des Abgases eine Vorrichtung eingesetzt, die auf kalten chemischen Reaktionen beruht und daher unmittelbar nach dem Einschalten voll wirksam ist. Eine plasmachemische Reaktion, ausgelöst durch eine elektrische Entladung im Abgas, erfüllt die genannten Anforderungen.

Versuche mit einer Barrierenentladung, in die etwa 5% der momentan vom Motor abgegebenen mechanischen Leistung als elektrische Leistung eingekoppelt werden, zeigen eine Verminderung der NOₓ- und HC-Konzentration um 30 - 70%. Wichtig dabei ist, daß die Entladung mit Frequenzen von mehreren kHz schnell an- und ausgeschaltet werden kann und bereits unmittelbar beim Einschalten ihre volle Wirksamkeit entfaltet. Auch beim ersten Anlassen eines völlig kalten Motors, was sogar zu einer Auskondensation von Wasser im plasmachemischen Reaktor führt, erreicht das System die gleichen Umsatzraten.

Die Erfindung beschränkt sich ausdrücklich nicht auf die Verwendung einer Barrierenentladung, obwohl diese besonders gut geeignet erscheint, sondern schließt auch alle anderen kurzzeitig zuschaltbaren und sofort wirksamen Techniken, insbesondere elektrisch betriebene Techniken, zur Schadstoffminderung, ein. Andere prinzipiell geeignete Systeme zur elektrischen Nachbehandlung von Abgas arbeiten beispielsweise mit Elektronenstrahlen, Mikrowellenenergie, mit Koronaentladungen oder eben mit der bereits genannten Barrierenentladung und sind aus der Litaratur bekannt. Es wird derzeit versucht, den elektrischen Leistungsbedarf dieser Vorrichtungen so weit zu reduzieren, daß auch ein Dauerbetrieb wirtschaftlich wird. Der verbleibende Entwicklungsbedarf zum Erreichen dieses Zieles ist derzeit jedoch noch sehr hoch.

Um das Verfahren zum schadstoffarmen Betreiben eines Verbrennungsmotors weitergehend zu modifizieren, werden die motorisch optimalen Betriebsparameter eingestellt. Der daraus resultierende Anstieg der Schadstoffrohemission vom Motor wird bewußt in Kauf genommen und durch die elektrische Nachbehandlung im Abgasstrang kompensiert. Ähnlich dem Dauerbetrieb wäre natürlich auch hier eine Verminderung des elektrischen Leistungsbedarfs der Nachbehandlung wünschenswert. Durch Ausnutzung der Verbrauchsverminderung des Motors aufgrund des optimierten Betriebs, die während der gesamten Betriebsdauer wirksam ist, kann der Leistungsbedarf der elektrischen Schadstoffminderung für jeweils kurze Zeit befriedigt werden, so daß im zeitlichen Mittel eine Verminderung der Schadstoffemissionen einerseits und des Kraftstoffverbrauchs andererseits erreicht wird.

Als weiterer Vorteil, insbesondere gegenüber elektrisch beheizten Katalysatoren, ist hervorzuheben, daß es genügt, die elektrische Entladung anzuschalten, wenn der Motor bereits läuft. Damit kann auf die Speicherung von elektrischer Energie zum Betrieb der Gasentladung weitgehend verzichtet werden. Zur Unterschreitung gewisser Schadstoffgrenzwerte ist eine bestimmte elektrische Leistung erforderlich, die unter anderem von Gasdurchsatz und Last abhängt. Damit ist klar, daß nur dann eine hohe elektrische Leistung aufgewendet werden muß, wenn Motor und Lichtmaschine diese auch zur Verfügung stellen können. Eine entsprechende Regelung der Betriebsdaten der elektrischen Abgasnachbehandlung, die Kenngrößen der Motorelektronik verarbeitet, kann beispielsweise mittels eines abgespeicherten Kennfeldes realisiert werden.

Die bereits angesprochene Barrierenentladung entsteht bei Anlegen einer elektrischen Wechselspannung ausreichender Amplitude an zwei Elektroden, von denen wenigstens eine von der namensgebenden dielektrischen Barriere bedeckt ist. In der Literatur werden für die Barrierenentladung mitunter auch die Bezeichnungen stille Entladung oder dielektrisch behinderte Entladung verwendet. Zu unterscheiden ist die Barrierenentladung von der Koronaentladung dadurch, daß mittels glatter Elektroden ein im wesentlichen homogenes elektrisches Feld erzeugt wird.

Zwischen den Elektroden befindet sich ein schmaler Spalt, der mit einem Gas wie Luft, Edelgasen oder, im hier beschriebenen Fall, mit Abgas eines Verbrennungsmotors gefüllt ist oder von diesem parallel zu den Elektrodenoberflächen durchströmt wird. Der Gasdruck liegt dabei im Bereich des Atmosphärendrucks, kann jedoch, ohne den Entladungsablauf grundlegend zu verändern, auch darunter oder darüber, beispielsweise zwischen etwa 100 hPa und 2000 hPa, liegen. In jedem Fall ist der Druck, der im Abgasstrang eines Verbrennungsmotors auftritt, verursacht durch Strömungswiderstand und Druckpulsationen des Motors, im für Barrierenentladungen geeigneten Bereich.

Bei jedem Spannungsanstieg der Wechselspannung bilden sich im Entladungsspalt viele dünne Streamerkanäle aus, sobald die Zündfeldstärke des Gases überschritten wird. Der Stromfluß durch die, auch Entladungsfilamente genannten, Streamerkanäle führt zu einer elektrischen Aufladung der Oberfläche der dielektrischen Barriere. Innerhalb weniger Nanosekunden wird so das von außen angelegte elektrische Feld durch die Oberflächenladung abgeschirmt und die Entladungsfilamente verlöschen wieder. Aufeinanderfolgende Entladungsereignisse in jeder Halbwelle der Wechselspannung sind voneinander weitgehend unabhängig, wenn die Frequenz der Wechselspannung zwischen 50 Hz und 400 kHz eingestellt wird.

Der beschriebene zeitlich transiente Entladungsablauf hat zwei wichtige Konsequenzen: Zum einen ist das System bereits beim ersten Spannungsanstieg wirksam. Zum anderen ist die Dauer jeder Einzelentladung so kurz, daß praktisch die gesamte eingekoppelte Energie in Form schneller Elektronen und nicht in Form einer Erwärmung des Entladungsgases auftritt. Diese Elektronen wiederum lösen die geforderten kalten plasmachemischen Reaktionen aus, indem sie mit Molekülen im Gas stoßen und diese anregen oder spalten.

Das gesamte System zur Abgasnachbehandlung besteht aus dem plasmachemischen Reaktor, der beispielsweise an der Stelle eines Auspufftopfes in den Abgasstrang integriert werden kann, und aus einem elektronischen Vorschaltgerät. Das Vorschaltgerät weist einen Stromanschluß für die Leistungsversorgung von der Lichtmaschine, einen Steuereingang von der Motorelektronik und einen Hochspannungsausgang zum Anschluß des Reaktors auf.

Durch diese wenigen einfachen Schnittstellen ist es möglich, ein derartiges System auch zur Nachrüstung in Altfahrzeugen anzubieten. Innerhalb gewisser Grenzen bezüglich der maximalen Leistungsaufnahme ist dies als Einbau zusätzlicher Teile in der beschriebenen Form möglich; zum Erzielen höherer Schadstoffumsatzraten kann es erforderlich werden, zusätzlich die Lichtmaschine oder die Lichtmaschine und die Autobatterie (Bleiakkumulator) zu verstärken, d.h. durch Typen höherer Leistung bzw. Kapazität zu ersetzen.

Beim Einbau in Neufahrzeugen kann alternativ das gesamte Vorschaltgerät oder zumindest die Ansteuerschaltung für die Hochspannungsendstufe mit der bekannten Motorelektronik in einer Baugruppe zusammengefaßt werden. Im zweiten Fall ist die verbleibende Endstufe äußerst kompakt und besteht nur aus wenigen mechanisch robusten Bauelementen, die auch mit dem Reaktor zu einer Baugruppe zusammengefaßt und als solche an der Stelle eines Auspufftopfes montiert werden kann. Dem Problem der mechanischen Robustheit der Endstufe steht der Vorteil einer einfacheren Auslegung der Zuleitungen zum Reaktor entgegen: Anstelle eines hochspannungsfesten Kabels ist nur eine stromstarke Zuleitung mit niedriger Spannung und einige dünne Steuerleitungen erforderlich.

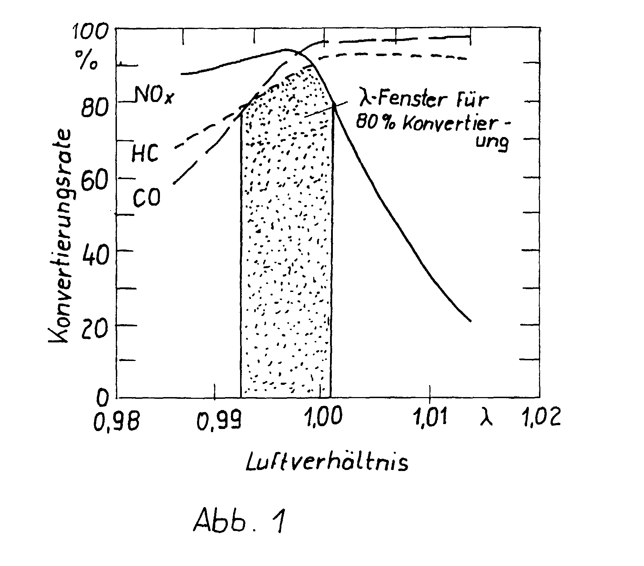

Als Beispiel für Beschränkungen bekannter katalytischer Technologien zur Schadstoffminderung zeigt Abbildung 1 die Konvertierungsrate eines 3-Wege-Katalysators in Abhängigkeit vom Luftverhältnis λ. Das Bild entstammt einer alten Arbeit und zeigt schraffiert den Bereich, in dem gleichzeitig die Schadstoffe CO, HC und NOₓ gegenüber der Konzentration im Rohabgas um mindestens 80% durch den Katalysator vermindert werden können. Moderne Katalysatorsysteme erreichen durch eine verbesserte Lambdaregelung einen Bestwert von etwa 95%. Aus dem Bild wird deutlich, daß bereits kleine Schwankungen im Betriebszustand des Motors, die das Luftverhältnis verändern können, die Effizienz der Abgasnachbehandlung drastisch verschlechtern.

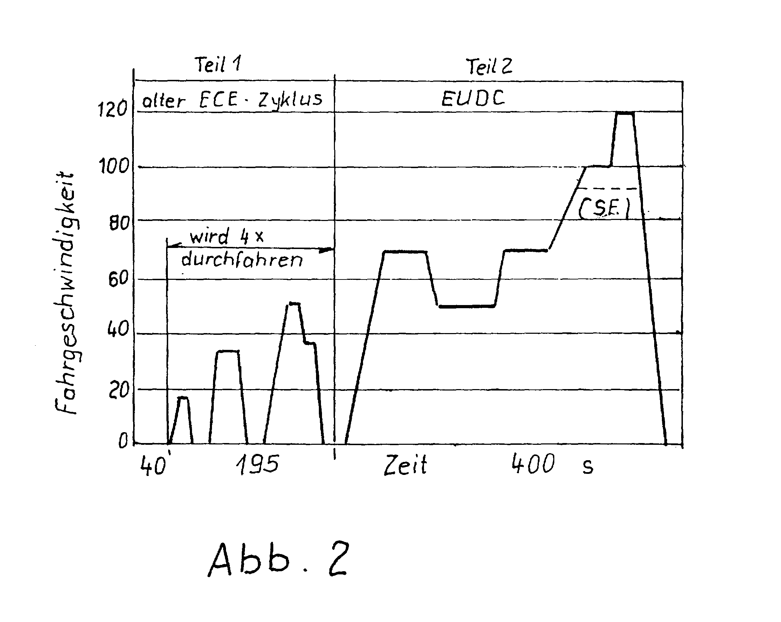

In Abbildung 2 ist die Fahrgeschwindigkeit im derzeit vorgeschriebenen europäischen Testzyklus über der Zeit aufgetragen. Die Testdauer beträgt 1.220 Sekunden, die Teststrecke ca. 11 km (gesamt), die mittlere Fahrgeschwindigkeit: ca. 32,5 km/h, die maximale Fahrgeschwindigkeit 120 km/h und die maximale Fahrgeschwindigkeit für schwachmotorisierte Fahrzeuge 90 km/h. Der erste Teil des Testzyklus, der einer Stadtfahrt bis 50 km/h entspricht wird dabei viermal durchfahren. Sowohl bei dieser Stadtfahrt als auch beim anschließenden Landstraßen- oder Autobahnbetrieb (EUDC - extra urban driving cycle) treten häufige Beschleunigungs- und Verzögerungsphasen auf. Neben diesen tragen vor allem die ersten Minuten des Zyklus zu der integrierten Schadstoffemission bei.

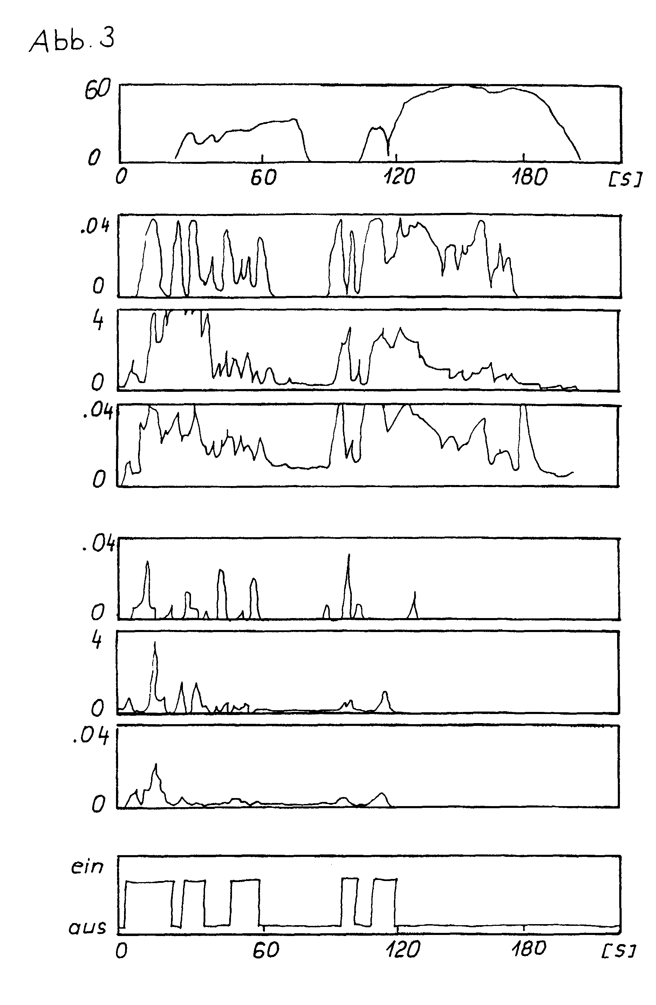

Abbildung 3 zeigt oben einen ähnlichen Geschwindigkeitsverlauf für den amerikanischen Testzyklus. Die sechs darunter angeordneten Kurven zeigen jeweils einen gemessenen Verlauf der Emissionen von Stickoxiden, Kohlenmonoxid und Kohlenwasserstoffen, also NOₓ-Emissionen, CO-Emissionen und HC-Emissionem, jeweils in Abhängigkeit von der Zeit. Die ersten drei Emissionsdiagramme enthalten Kurven mit den Rohemissionen vom Motor. Die darauf folgenden drei Diagramme zeigen wiederum Kurven von Emissionen, soweit sie hinter dem Katalysator noch als verbleibende Schadstoffmenge vorhanden sind. Die Kurven gelten wiederum für den zeitlichen Verlauf NOₓ-Emissionen, CO-Emissionen und HC-Emissonen, wiederum in g/sec. Für den Katalysator wird bereits eine sehr fortschrittliche λ-Regelung angewendet. Während die Rohemissionen während der gesamten Testdauer stark schwanken, enthält das nachbehandelte Abgas praktisch nur zu Zyklusbeginn größere Schadstoffmengen. Die späteren Emissionspeaks lassen sich mit Lastwechseln, die durch die Fahrkurve oder durch Schaltpunkte des Getriebes verursacht werden, korrelieren. Aus Anzahl und Dauer der Peaks wird ersichtlich, daß eine zusätzliche Vorrichtung zur elektrischen Abgasnachbehandlung nur für einen geringen Teil der Betriebsdauer (hier etwa 10 - 15%) und während des Warmlaufs für etwa 30 Sekunden eingeschaltet werden muß (ganz unten).

Das unterste Diagramm der Abbildung zeigt den Funktionszustand einer Vorrichtung zur elektrischen Nachbehandlung des Abgases in Abhängigkeit von der Zeit, wobei für letztere derselbe Maßstab gewählt wurde, wie für die obersten sieben Diagramme dieser Abbildung. Aus dessen unterstem Diagramm ergibt sich, daß die elektrische Nachbehandlung des Abgases während der Emissionspeaks erfolgt, die vorwiegend während des etwa 30 Sekunden dauernden Warmlaufs des Motors auftreten, sowie nach dem Warmlaufen entsprechend den Lastwechseln, wie es vorstehend beschrieben wurde. Dementsprechend ist es ein Vorteil des Verfahrens, die elektrische Nachbehandlung nur dann durchzuführen, wenn die Größe der Schadstoffmengen hierzu Verlassung gibt. Weil also das Verfahren nur während der Überschreitung vorbestimmter Schadstoffmengen durchgeführt werden muß, ist die hierfür aufzuwendende Leistung bzw. Energie entsprechend begrenzt, so daß eine entsprechend vorteilhafte Auslegung der elektrischen Anlage des Verbrennungsmotors möglich ist.

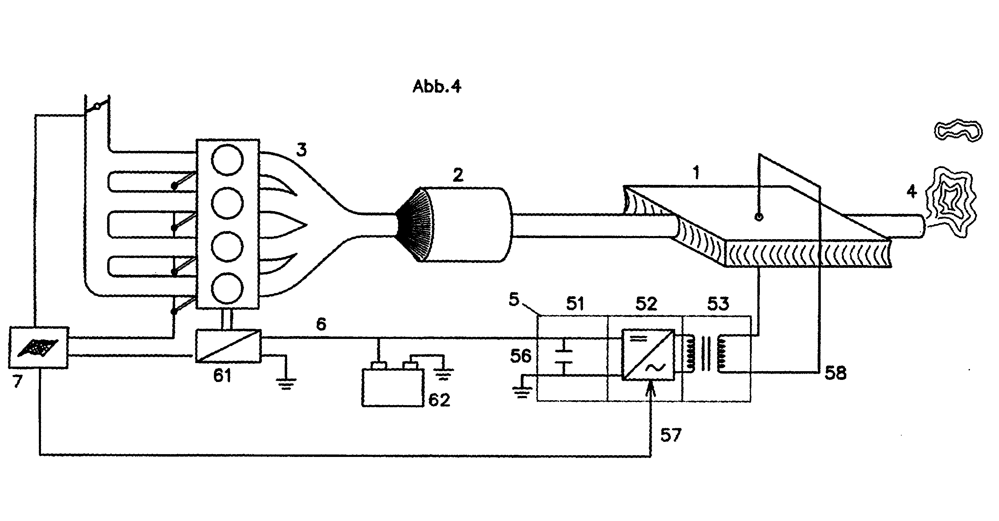

Abbildung 4 zeigt das gesamte System zur Abgasnachbehandlung und seine Integration in den Abgasstrang und die Elektrik eines Kraftfahrzeuges. Es besteht aus dem plasmachemischen Reaktor (1), der beispielsweise an der Stelle eines Auspufftopfes vor dem Endrohr (4) in den Abgasstrang integriert werden kann. Vor dem Reaktor (1) und hinter dem Auspuffkrümmer (3), wie dargestellt, oder hinter dem plasmachemischen Reaktor, kann sich zusätzlich ein Katalysator (2), beispielsweise ein Oxidations- oder 3-Wege-Katalysator aus Edelmetall oder ein DeNOₓ-Katalysator zur selektiven katalytischen Reduktion (SCR), befinden. Die Wechselspannung wird von einem elektronischen Vorschaltgerät (5) erzeugt, welches eine Pufferung der Betriebsspannung (51), eine Endstufe mit frei ansteuerbarer Leistungselektronik (52) und einen Hochspannungsübertrager (53) enthält. Das Vorschaltgerät (5) weist einen Stromanschluß (56) für die Leistungsversorgung (6) von der Lichtmaschine (61) und/oder der Autobatterie (62), einen Steuereingang (57) von der Motorelektronik (7) und einen Hochspannungsausgang (58) zum Anschluß des Reaktors (1) auf. Alternativ können das gesamte Vorschaltgerät (5) oder zumindest der Puffer (51) und die Ansteuerschaltung (52) für die Hochspannungsendstufe (53) mit der Motorelektronik (7) in einer Baugruppe zusammengefaßt werden. Die verbleibende Endstufe (53) ist äußerst kompakt und kann ihrerseits auch mit dem Reaktor (1) zu einer Baugruppe zusammengefaßt werden.

Zur Herabsetzung des Kraftstoffverbrauchs und der dadurch verursachten Verminderung der CO₂-Emission wird ein Verbrennungsmotor auch im instationären Betrieb und während der Warmlaufphase weitgehend im motorisch optimalen Betriebspunkt gefahren. Die damit einhergehende kurzzeitige Erhöhung des Schadstoffgehaltes im Rohabgas wird bewußt in Kauf genommen, da im Abgasstrang eine Vorrichtung zur Nachbehandlung des Abgases vorhanden ist. Insbesondere wird eine elektrische Entladung, die eine Zersetzung der Schadstoffe hervorruft, während des kurzen Zeitraums der erhöhten Rohemission zugeschaltet. Da Kaltstart- und Instationärphasen den bei weitem überwiegenden Anteil der Gesamtemission eines Testzyklus und auch des realen Betriebes ausmachen, kann bei gleichzeitiger Kraftstoffeinsparung eine signifikante Schadstoffverminderung erreicht werden. Damit wird ein Verfahren zum schadstoffarmen Betreiben eines Verbrennungsmotors erreicht, daß einerseits an den transienten Betrieb angepaßt ist und andererseits nicht die Nachteile bezüglich des Kraftstoffverbrauch aufzuweisen braucht, wie sie von anderen Verfahren bekannt sind.

## Patentansprüche

1. Verfahren zum schadstoffarmen Betreiben eines Verbrennungsmotors, dessen Abgas während des Motorbetriebs einer elektrischen Nachbehandlung zur Umwandlung von Schadstoffen unterworfen wird, deren Emissionsverlauf gemessen wird, **dadurch gekennzeichnet,** daß die elektrische Nachbehandlung des Abgases nur für denjenigen Teil der Betriebsdauer während des Warmlaufens oder während einer Laständerung des Motors erfolgt, währenddessen Emissionspeaks auftreten.

2. Verfahren nach Anspruch 1, **dadurch gekennzeichnet,** daß die elektrische Nachbehandlung unmittelbar nach dem Kaltstart zugeschaltet wird.

3. Verfahren nach einem der Ansprüche 1 oder 2, **dadurch gekennzeichnet,** daß die elektrische Nachbehandlung bereits beim Betätigen des Anlassers, d.h. beim Beginn der Kraftstoffeinspritzung zugeschaltet wird.

4. Verfahren nach einem der Ansprüche 1 - 3, **dadurch gekennzeichnet,** daß die elektrische Nachbehandlung bei Lastwechseln des Motors, also bei Lasterhöhung oder plötzlichem Lastwegnehmen zugeschaltet wird.

5. Verfahren nach einem der Ansprüche 1 - 4, **dadurch gekennzeichnet,** daß die elektrische Nachbehandlung eine Barrierenentladung ist, die mit einer Wechselspannung im weitesten Sinne, die sowohl sinusförmige, als auch rechteckförmige oder schmale pulsförmige Signale umfaßt, mit einer Frequenz zwischen etwa 500 Hz und 500 kHz angeregt wird.

6. Verfahren nach einem der Ansprüche 1 - 5, **dadurch gekennzeichnet,** daß die Wechselspannung zur Austastung der elektrischen Entladung mit zeitlichen Abständen zwischen einigen Mikrosekunden und einigen zehn Sekunden an- und abgeschaltet wird.

7. Verfahren nach einem der Ansprüche 1 - 6, **dadurch gekennzeichnet,** daß die momentane Leistung der Entladung durch Einstellen der Frequenz der Wechselspannung geregelt wird.

8. Verfahren nach einem der Ansprüche 1 - 7, **dadurch gekennzeichnet,** daß die Regelung der Frequenz, der Spannung und der Austastung der Entladung mittels eines gespeicherten Kennlinienfeldes erfolgt.

9. Verfahren nach einem der Ansprüche 1 - 8, **dadurch gekennzeichnet,** daß die elektrische Entladung in der Warmlaufphase des Motors für einen Zeitraum von etwa 20 bis 40 Sekunden erfolgt.

10. Verfahren nach einem der Ansprüche 1 - 9, **dadurch gekennzeichnet,** daß die elektrische Entladung bei Laständerungen für jeweils weniger als 10 bis 20 Sekunden erfolgt.

11. Verfahren nach einem der Ansprüche 1 - 10, **dadurch gekennzeichnet,** daß der Emissionsverlauf motortypenmäßig gemessen und kennlinienfeldmäßig für die Anwendung der elektrischen Nachbehandlung des Abgases eingesetzt wird.

12. Verfahren nach einem der Ansprüche 1 - 10, **dadurch gekennzeichnet,** daß der Emissionsverlauf während der Betriebsdauer des Motors gemessen und währenddessen für die Anwendung der elektrischen Nachbehandlung des Abgases eingesetzt wird.

13. Verfahren nach einem der Ansprüche 1 - 12, **dadurch gekennzeichnet,** daß die elektrische Nachbehandlung des Abgases nur dann erfolgt, wenn die Emissionspeaks eine vorbestimmte Schadstoffmenge überschreiten.

14. Verfahren nach einem der Ansprüche 1 - 13, **dadurch gekennzeichnet,** daß die Betriebsparameter des Verbrennungsmotors während der elektrischen Nachbehandlung seines Abgases zur Kraftstoffverbrauchsminderung und/oder zur Leistungsentwicklung optimal eingestellt werden.

15. Vorrichtung zum schadstoffarmen Betreiben eines Verbrennungsmotors, in dessen Abgasstrang ein chemischer Reaktor (1) eingebaut ist, der eine Einrichtung zur Erzeugung elektrischer Entladungen im Abgas aufweist, und der für seine Leistungsversorgung einen Stromanschluß (56) an eine Lichtmaschine (61) und/oder eine Batterie (62) hat, mit einer Regelungseinrichtung, von der der Beginn oder das Ende, die Frequenz, die Energie und andere Kenndaten der elektrischen Entladungen regelbar sind, **dadurch gekennzeichnet,** daß die Regelungseinrichtung eine Regelung der Kenndaten der elektrischen Entladungen bei Betrieb des Verbrennungsmotors während des Warmlaufens oder während einer Laständerung des Motors, während des Auftretens von Emissionspeaks durchführt.

16. Vorrichtung nach Anspruch 15, **dadurch gekennzeichnet,** daß der chemische Reaktor (1) an ein Vorschaltgerät (5) angeschlossen ist, das der elektrischen Versorgung des chemischen Reaktors (1) dient und mit einer Motorelektronik des Verbrennungsmotors zu einer Baueinheit zusammengefaßt ist.

17. Vorrichtung nach Anspruch 15 oder 16, **dadurch gekennzeichnet,** daß der chemische Reaktor (1) mit einer Hochspannungsendstufe (53) zu einer im Abgasstrang angeordneten Baugruppe an der Stelle eines Auspufftopfes angeordnet ist.

## Claims

1. A method for low pollution operation of an internal combustion engine, whose exhaust gas undergoes electrical after-treatment during operation of the engine to convert pollutants, whose emission behaviour is measured, characterized in that the electrical after-treatment of the exhaust gas only takes place for that part of the duration of operation during warming up or during a load change of the engine, during which emission peaks occur.

2. A method according to claim 1, characterized in that the electrical after-treatment is switched on directly after the cold start.

3. A method according to claim 1 or 2, characterized in that the electrical after-treatment is switched on already on operation of the starter, i.e. at the beginning of the fuel injection.

4. A method according to any of claims 1 to 3, characterized in that the electrical after-treatment is switched on at changes of load of the engine, accordingly on increase in the load or sudden loss of load.

5. A method according to any of claims 1 to 4, characterized in that the electrical after-treatment is a barrier discharge, which is excited by an alternating voltage in the widest sense, which includes both sinusoidal and rectangular or narrow pulse form signals, with a frequency between about 500 Hz and 500 kHz.

6. A method according to any of claims 1 to 5, characterized in that the alternating voltage for gating the electrical discharge is switched on and off at intervals of time between some microseconds and some tens of seconds.

7. A method according to any of claims 1 to 6, characterized in that the instantaneous power of the discharge is regulated by adjusting the frequency of the alternating voltage.

8. A method according to any of claims 1 to 7, characterized in that the regulation of the frequency, the voltage and the gating of the discharge is effected by means of a stored family of characteristics.

9. A method according to any of claims 1 to 8, characterized in that the electrical discharge is effected for an interval of time of about 20 to 40 seconds in the warming up phase of the engine.

10. A method according to any of claims 1 to 9, characterized in that the electrical discharge is effected for less than 10 to 20 seconds in each case for load changes.

11. A method according to any of claims 1 to 10, characterized in that the emission behaviour is measured in accordance with engine type and is set in accordance with a family of characteristics for the application to the electrical after-treatment of the exhaust gas.

12. A method according to any of claims 1 to 10, characterized in that the emission behaviour is measured during the duration of operation of the engine and is used during this for the application to the electrical after-treatment of the exhaust gas.

13. A method according to any of claims 1 to 12, characterized in that the electrical after-treatment of the exhaust gas is only effected when the emission peaks exceed a predetermined amount of pollutants.

14. A method according to any of claims 1 to 13, characterized in that the operating parameters of the internal combustion engine are optimally adjusted during the electrical after-treatment of its exhaust gas for reduction in fuel consumption and/or for power development.

15. A device for low pollution operation of an internal combustion engine, in whose exhaust system a chemical reactor (1) is fitted, comprising a device for generating electrical discharges in the exhaust gas and which has a current connection (56) for its power supply connected to a generator (61) and/or a battery (62), with a regulating device from which the beginning or the end, the frequency, the energy and other characteristic data of the electrical discharges can be regulated, characterized in that the regulating device carries out regulation of the characteristic data of the electrical discharges in operation of the internal combustion engine during warming up or during a change of load of the engine, during the occurrence of emission peaks.

16. A device according to claim 15, characterized in that the chemical reactor (1) is connected to a preceding apparatus (5) which serves for the electrical supply of the chemical reactor (1) and is combined with engine electronics of the internal combustion engine into one unit.

17. A device according to claim 15 or 16, characterized in that the chemical reactor (1) is arranged with a high voltage end stage (53) in a unit arranged in the exhaust system in place of an exhaust silencer.

## Revendications

1. Procédé pour faire fonctionner un moteur à combustion interne avec une faible émission de matières polluantes, dont les gaz d'échappement sont soumis à un traitement électrique, en aval pour convertir les matières polluantes et dont on mesure la courbe d'émission pendant le fonctionnement du moteur,
caractérisé en ce que
le traitement électrique en aval des gaz d'échappement ne se fait que pendant le chauffage du moteur ou au cours d'une variation de charge, dans la partie de la durée de fonctionnement au cours de laquelle se produisent des pics d'émission.

2. Procédé selon la revendication 1,
caractérisé en ce que
le traitement électrique en aval est branché immédiatement après le démarrage à froid.

3. Procédé selon l'une des revendications 1 ou 2,
caractérisé en ce que
le traitement électrique en aval est branché dès que l'on actionne le démarreur c'est-à-dire au début de l'injection de carburant.

4. Procédé selon l'une des revendications 1 à 3,
caractérisé en ce que
le traitement électrique en aval est branché en cas de variation de charge du moteur c'est-à-dire en cas d'augmentation de charge ou de brusque coupure de charge.

5. Procédé selon l'une des revendications 1 à 4,
caractérisé en ce que
le traitement électrique en aval est une barrière à décharge excitée par une tension alternative dans le sens le plus large comprenant à la fois des signaux sinusoïdaux et des signaux rectangulaires ou impulsionnels de faible largeur, d'une fréquence comprise entre environ 500 Hz et 500 kHz.

6. Procédé selon l'une des revendications 1 à 5,
caractérisé en ce que
la tension alternative est branchée puis coupée pendant des intervalles de temps compris entre quelques microsecondes et quelques dizaines de secondes, pour détecter la décharge électrique.

7. Procédé selon l'une des revendications 1 à 6,
caractérisé en ce que
la puissance instantanée de la décharge est régulée par le réglage de la fréquence de la tension alternative.

8. Procédé selon l'une des revendications 1 à 7,
caractérisé en ce que
la régulation de la fréquence, de la tension et de la détection de la décharge se font à l'aide de champs de caractéristiques mis en mémoire.

9. Procédé selon l'une des revendications 1 à 8,
caractérisé en ce que
la décharge électrique se fait dans la phase de chauffage du moteur pour une période comprise entre environ 20 et 40 secondes.

10. Procédé selon l'une des revendications 1 à 9,
caractérisé en ce que
la décharge électrique se fait pour des variations de charge d'une durée chaque fois inférieure à 10-20 secondes.

11. Procédé selon l'une des revendications 1 à 10,
caractérisé en ce que
la courbe d'émission mesurée par type de moteur et en fonction des champs de caractéristiques est utilisée pour appliquer le traitement électrique à chaud des gaz d'échappement.

12. Procédé selon l'une des revendications 1 à 10,
caractérisé en ce que
la courbe d'émission est mesurée pendant la durée de fonctionnement du moteur et introduite pendant ce temps pour appliquer le traitement électrique en aval, aux gaz d'échappement.

13. Procédé selon l'une des revendications 1 à 12,
caractérisé en ce que
le traitement électrique en aval, des gaz d'échappement n'est effectué que si les pics d'émission dépassent une quantité prédéterminée de polluants.

14. Procédé selon l'une des revendications 1 à 13,
caractérisé en ce qu'
on règle de manière optimale les paramètres de fonctionnement du moteur à combustion interne pendant le traitement électrique en aval des gaz d'échappement du moteur pour réduire la consommation de carburant et/ou pour développer de la puissance.

15. Dispositif pour faire fonctionner un moteur à combustion interne avec une faible émission de polluants, intégrant un réacteur chimique (1) dans sa conduite de gaz d'échappement, qui comporte une installation pour générer les décharges électriques dans les gaz d'échappement et qui, pour son alimentation en puissance comporte un branchement électrique (56) à la génératrice (61) et/ou à une batterie (62), comprenant une installation de régulation pour réguler le début ou la fin, la fréquence, l'énergie et d'autres caractéristiques des décharges électriques,
caractérisé en ce que
l'installation de régulation effectue une régulation des caractéristiques des décharges électriques au cours du fonctionnement du moteur à combustion interne pendant le chauffage du moteur ou pendant une variation de charge du moteur lorsque se produisent des pics d'émission.

16. Dispositif selon la revendication 15,
caractérisé en ce que
le réacteur chimique (1) est relié à un appareil de commutation (5) en amont, servant à l'alimentation électrique du réacteur chimique (1) et relié à une électronique de moteur pour le moteur à combustion interne de manière à ne constituer qu'un ensemble.

17. Dispositif selon la revendication 15 ou la revendication 16,
caractérisé en ce que
le réacteur chimique (1) est monté avec un étage de puissance de haute tension (53) sous la forme d'un ensemble placé dans la ligne des gaz d'échappement, à l'endroit du tube d'échappement.
